# EUROPÄISCHE PATENTSCHRIFT

(11) **EP 1 705 387 B1**
(45) Veröffentlichungstag und Bekanntmachung des Hinweises auf die Patenterteilung: **07.01.2009**
(21) Anmeldenummer: 06005693.4
(22) Anmeldetag: 21.03.2006
(51) Int. Cl.: F16B 15/08

(54) **Magazinband**
Magazine strip
Ruban de chargement

(30) Priorität: 24.03.2005 DE 102005014589
(43) Veröffentlichungstag der Anmeldung: 27.09.2006
(73) Patentinhaber: Adolf Würth GmbH & Co. KG, 74653 Künzelsau (DE)
(72) Erfinder: Kollmar, Frank, 74248 Ellhofen (DE); Frank, Uwe, 74629 Windischenbach (DE); Wieland, Achim, 74211 Leingarten (DE)
(74) Vertreter: Patentanwälte Ruff, Wilhelm, Beier, Dauster & Partner

(56) Entgegenhaltungen:
- US-A- 3 463 304
- US-A- 5 836 732
- US-A1- 2003 118 424
- US-A1- 2003 136 693
- US-B1- 6 779 959

## Beschreibung

Die Erfindung betrifft ein Magazinband für Befestigungselemente, beispielsweise Nägel, Bolzen oder dergleichen.

Es ist bekannt, dass man für voll- oder halbautomatisch betriebene Nagelgeräte die erforderlichen Nägel oder Bolzen in Magazinen vorhält, um zwischen zwei Setzvorgängen einen neuen Bolzen in das Gerät einzuführen. Ebenfalls bekannt sind Vorrichtungen, mit denen die Befestigungselemente ohne ein Magazin einfach eingeführt werden.

Bei Bolzensetzgeräten müssen die Bolzen auch noch im Schusskanal durch das Magazinband ausgerichtet gehalten werden.

Bei einem bekannten Nagelstreifen dieser Art (EP 237 476) sind die Nägel in Führungsbüchsen gehalten, die durch Verbindungsmittel miteinander verbunden sind. Die Verbindungsmittel sind so ausgebildet, dass sie mittig zwischen zwei Führungsbüchsen geschwächt sind, so dass sie an dieser Stelle abreißen, wenn der Bolzen durch das Bolzensetzgerät gesetzt wird. Für die Unterbringung des abgerissenen Verbindungsmittels an der jeweils vordersten in dem Führungskanal sitzenden Führungsbüchse ist eine Ausnehmung in der Mündungsbohrung vorhanden. Die Führungsbüchsen haben im Bereich ihrer beiden axialen Enden einen Führungsbereich mit einem kreisrunden Querschnitt. An der Außenseite des Führungsbereichs können kleine Vorsprünge angeordnet sein.

Ebenfalls bekannt ist ein Magazinband für Befestigungselemente, bei dem für jedes Befestigungselement ein Aufnahmekörper vorhanden ist, bei dem aber die Führung im Schusskanal selbst durch den Kopf des Befestigungselements übernommen wird.

Weiterhin ist eine Anordnung von Befestigungselementen bekannt, die mithilfe zweier Kunststoffstreifen mit gegenseitigem Abstand gehalten werden. Die Kunststoffstreifen bilden zwischen Aufnahmekörpern für die Befestigungselemente Stege, die in Richtung auf den später zu setzenden Nagel einen verringerten Querschnitt aufweisen (US 3463304).

Der Erfindung liegt die Aufgabe zu Grunde, ein Magazinband für Bolzensetzgeräte zu schaffen, das eine gute Führung der Befestigungselemente sowohl in einem Magazin während der Zuführung als auch im Schusskanal des Bolzensetzgeräts gewährleistet.

Zur Lösung dieser Aufgabe schlägt die Erfindung ein Magazinband mit den im Anspruch 1 genannten Merkmalen vor. Weiterbildungen der Erfindung sind Gegenstand von Unteransprüchen.

Das Verbindungsmittel zwischen je zwei benachbarten Aufnahmekörpern hat einerseits die Aufgabe, die einzelnen Aufnahmekörper zu einem Band zusammenzufassen. Das Band muss eine ausreichende Stabilität aufweisen, damit es im Magazin in der erforderlichen hohen Taktzahl mit geringem Aufwand aber sicher transportiert werden kann. Andererseits soll das Verbindungsmittel die Möglichkeit des schnellen und nicht störenden Abreißens beim Setzvorgang bieten. Durch die Versetzung der Abreißstelle nach hinten, also in Richtung auf den nächsten bei einem späteren Vorgang zu setzenden Nagel, wird dafür gesorgt, dass an der Vorderseite des im Schusskanal befindlichen Aufnahmekörpers kein Vorsprung vorhanden ist, der in eine spezielle Ausnehmung eingreifen müsste. Diese spezielle Ausnehmung ist also beim Gerät nicht mehr erforderlich.

Um den Abstand zwischen zwei Aufnahmekörpern möglichst gering halten zu können und andererseits eine Versetzung der Abreißstelle aus der Mitte heraus zu ermöglichen, ist gemäß der Erfindung vorgesehen, dass die der Abreißstelle zugewandte Seite des näher benachbarten Aufnahmekörpers eine mindestens bis zu der Spitze des Befestigungselements zuzuordnende Stirnfläche des Aufnahmekörpers reichende Durchtrittskerbe aufweist. Diese Durchtrittskerbe ist so ausgebildet sein, dass der an dem zugeordneten Aufnahmekörper verbleibende Teil des Verbindungsmittels in axialer Richtung durch die Kerbe hindurch passt.

Bei dem Setzvorgang muss der im Schusskanal befindlichen Aufnahmekörper möglichst schnell und störungsfrei zerstört werden. Um dies zu ermöglichen, kann in Weiterbildung der Erfindung vorgesehen sein, dass mindestens die der Spitze des Befestigungselements zugewandte Stirnfläche des Aufnahmekörpers eine sich vorzugsweise über die gesamte Stirnfläche erstreckende Kerbe aufweist. Bei dieser Kerbe handelt es sich um eine Schwächungsstelle, die zwar bei der Führung des Befestigungselements im Magazin und im Schusskanal keine nachteilige Auswirkungen hat, die aber bei einer axialen Belastung im Moment des Schießens zu einem leichteren Zerreißen des Aufnahmekörpers führt. Dies gilt insbesondere dann, wenn die Kerbe die in der Stirnfläche vorhandene Öffnung für den Nagel durchquert.

In nochmaliger Weiterbildung der Erfindung kann vorgesehen sein, dass die Kerben aller Aufnahmekörper parallel zueinander und vorzugsweise quer zur Längsachse des Magazinbands verlaufen. Insbesondere können sie durch die Mitte der Projektion der Innenöffnung für das Befestigungselement verlaufen.

In nochmaliger Weiterbildung der Erfindung kann vorgesehen sein, dass mindestens die gleich gerichteten Stirnflächen der Aufnahmekörper in jeweils parallelen Ebenen liegen.

Während im Stand der Technik die Aufnahmekörper in ihren Endbereichen in der Regel kreisrund verlaufen, gegebenenfalls mit kleinen Vorsprüngen, schlägt die Erfindung vor, dass die Aufnahmekörper des Magazinbands mindestens im Bereich ihrer Stirnflächen einen rechteckigen, insbesondere quadratischen Querschnitt aufweisen. Die Aufnahmekörper müssen nämlich nicht nur im Schusskanal das jeweilige Bolzenelement führen, wozu ein kreisrunder Querschnitt der Aufnahmekörper durchaus geeignet ist, sondern sie müssen auch die Führung der Bolzenelemente im Magazin gewährleisten. Die Erfinder der in der vorliegenden Anmeldung beschriebenen Erfindung haben nun herausgefunden, dass die Führung des Magazinbands im Magazin durch eine rechteckige bzw. quadratische Ausbildung verbessert werden kann. Dies gilt insbesondere für den Aufnahmekörper für den als nächsten zu setzenden Bolzen.

In nochmaliger Weiterbildung der Erfindung kann vorgesehen sein, dass die Seitenkanten der rechteckigen Endbereiche der Aufnahmekörper parallel zu der Längsrichtung des Magazinbands verlaufen.

Es ist aber ebenfalls möglich und liegt im Rahmen der Erfindung, dass die Aufnahmekörper mindestens im Bereich ihrer Stirnflächen einen runden, insbesondere kreisrunden Querschnitt aufweisen.

Erfindungsgemäß kann vorgesehen sein, dass die Achsen der Innenöffnungen der Aufnahmekörper für die Bolzenelemente senkrecht zur Längsrichtung des Magazinbands verlaufen.

Es ist aber ebenfalls möglich und wird von der Erfindung vorgeschlagen, dass die Achsen der Innenöffnungen der Aufnahmekörper für die Bolzenelemente schräg zur Längsachse des Magazinbands verlaufen, wobei der Winkel zwischen Längsachsen der Bolzenelemente und Längsachse des Magazinbands so gewählt ist, dass die Spitze des vordersten Bolzenelements näher an der Öffnung des Schusskanals liegt als die Spitzen der weiteren später zu setzenden Befestigungselemente. Beispielsweise ist hier ein Winkel von etwa 120 ° vorgesehen.

Erfindungsgemäß kann in Weiterbildung vorgesehen sein, dass die Aufnahmekörper im Bereich zwischen ihren Stirnflächen einen kleineren Querschnitt aufweisen. Dies kann nicht nur zur besseren Führung der Aufnahmekörper im Magazin dienen, sondern verringert auch die Menge des für das Magazinband zu verwendenden Ausgangsmaterials.

In Weiterbildung der Erfindung kann vorgesehen sein, dass die in axialer Richtung der Innenöffnung gemessene Erstreckung des Verbindungsmittels zwischen zwei Aufnahmekörpern etwa der Länge des Bereichs mit verringertem Querschnitt entspricht. Diese Länge kann auch etwas kleiner sein. Aus Gründen der Stabilität während des Transports des Magazinbands im Magazin soll das Verbindungsmittel sich über eine bestimmte Länge erstrecken, also nicht nur punktförmig sein.

In Weiterbildung kann vorgesehen sein, dass der Bereich verringerten Querschnitts des Aufnahmekörpers eine mindestens einseitige Abflachung auf der Breitseite des Magazins bildet. Auch dies kann für eine bessere Führung des Magazinbands im Magazin ausgenutzt werden.

Erfindungsgemäß kann das Magazinband einstückig aus Kunststoff gespritzt sein.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine perspektivische Ansicht eines Magazinbands mit teilweise gefüllten Innenöffnungen;
- Figur 2: eine der Figur 1 entsprechende Darstellung mit geschnittenem Magazinband;
- Figur 3: eine Stirnansicht des Magazinbands von der der Spitze der Befestigungselemente zugewandten Seite her;
- Figur 4: in vergrößertem Maßstab die Stirnseite eines Aufnahmekörpers;
- Figur 5: in vergrößertem Maßstab eine Seitenansicht der Verbindung zwischen zwei Aufnahmekörpern;
- Figur 6: eine der Figur 4 entsprechende Darstellung bei einer geänderten Ausführungsform eines Aufnahmekörpers;
- Figur 7: eine perspektivische Darstellung eines einzelnen Aufnahmekörpers;
- Figur 8: einen Schnitt quer zur Längserstreckung durch die Trennstelle zwischen zwei Aufnahmekörpern;
- Figur 9: eine der Figur 8 entsprechende Darstellung einer gegenüber Figur 8 abgeänderten Ausführungsform;
- Figur 10: eine den Figuren 8 und 9 entsprechende Darstellung bei einer nochmals weiteren Ausführungsform.
- Figur 11: eine in der Figur 7 ähnliche Darstellung eines anderen Aufnahmekörpers.

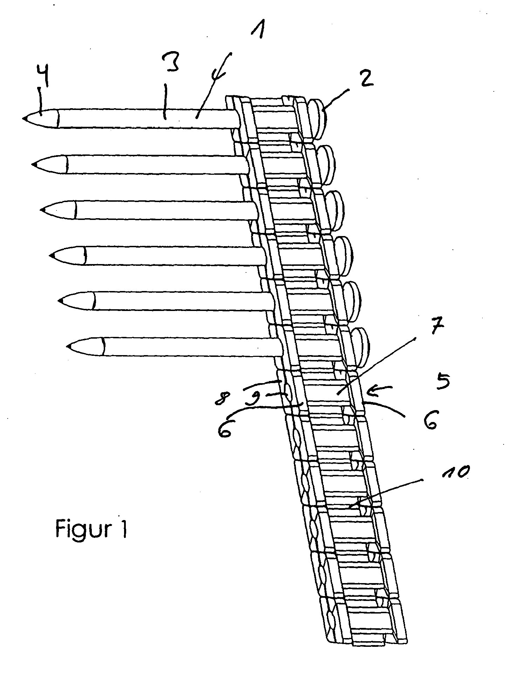

Figur 1 zeigt in einer Übersicht die perspektivische Darstellung eines Magazinbands, dessen eine Hälfte mit Befestigungselementen 1 versehen ist. Die Befestigungselemente sind übliche Bolzen mit einem Kopf 2, einem Schaft 3 und einer Spitze 4. Die Befestigungselemente 1 sind deutlich länger als die in gleicher Richtung gemessene Erstreckung des Magazinbands. Das Magazinband enthält für jedes Befestigungselement einen Aufnahmekörper 5, der zwei im Querschnitt quadratische Endbereiche 6 aufweist, die durch einen im Querschnitt verringerten Mittelteil 7 einstückig miteinander verbunden sind. An der in Figur 1 zu sehenden Stirnfläche 8 mündet eine Innenöffnung 9 für den Schaft 3 des Befestigungselements 1 aus. Je zwei benachbarten Aufnahmekörper 5 sind durch ein Verbindungsmittel 10 miteinander verbunden. Das Magazinband weist eine geradlinige Längserstreckung auf, die schräg zu der Richtung der Befestigungselemente 1 verläuft. Die Anordnung ist so getroffen, dass das in Figur 1 obere Ende des Magazinstreifens dem Schusskanal näher ist als das in Figur 1 untere Ende. Mit anderen Worten ist der obere Nagel der erste Nagel, der geschossen wird. Auf diese Weise wird auch ein falsches Einlegen des Magazinstreifens verhindert.

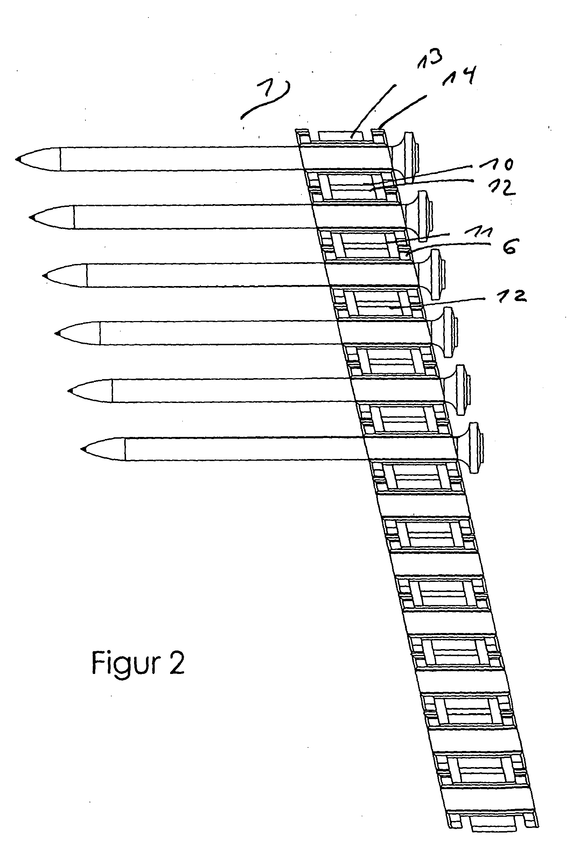

Aus der Schnittdarstellung der Figur 2 ergibt sich, dass das Verbindungsmittel 10 zwischen zwei Aufnahmekörpern eine gewisse Längserstreckung in Richtung der Befestigungselemente 1 aufweist, dass aber zwischen den in Längsrichtung der Befestigungselemente verlaufenden Enden 11 des Verbindungsmittels und den Endbereichen 6 der Aufnahmekörper noch ein Abstand vorhanden ist.

Sowohl der Figur 1 als auch der Figur 2 kann man entnehmen, dass die Endflansche 6 benachbarter Aufnahmekörper einen sehr geringen Abstand voneinander aufweisen.

Die Abreißstelle 12 jedes Verbindungsmittels 10 liegt auf der dem jeweils nächsten Befestigungselement zugewandten Seite. In Figur 2 ist wiederum, wie in Figur 1, das obere Befestigungselement 1 das als erstes zu setzende. Die Abreißstelle 12 liegt aus der Mitte zwischen diesem und dem nächsten Befestigungselement heraus in Richtung auf das nächste zu setzende Befestigungselement 1 versetzt. Dies führt dazu, dass nach einem Abreißen der vor dem vordersten bzw. in Figur 2 obersten Befestigungselement verbleibende Rest 13 des Verbindungsmittels nicht über die entsprechende Außenfläche 14 des Aufnahmekörpers hinaus ragt.

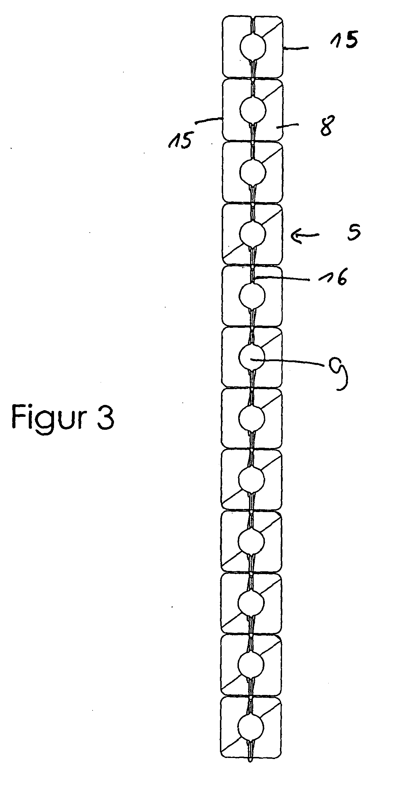

Figur 3 zeigt eine Draufsicht auf die Stirnflächen 8 der Aufnahmekörper 5 aus der Richtung der Spitzen 4 der Befestigungselemente 1. Die hier zu sehenden Seitenkanten 15 der Endbereiche 6 der Aufnahmekörper verlaufen in einer Linie in Längsrichtung des Magazinbands. Die Stirnfläche 8 der Aufnahmekörper weist eine in Längsrichtung des Magazinbands durch die Mitte der Innenöffnungen 9 verlaufende Kerbe 16 auf. Diese im Querschnitt etwa dreieckige Kerbe verbessert das Aufreißen des im Schusskanal befindlichen Aufnahmekörpers 5 im Moment des Setzens des Befestigungselements.

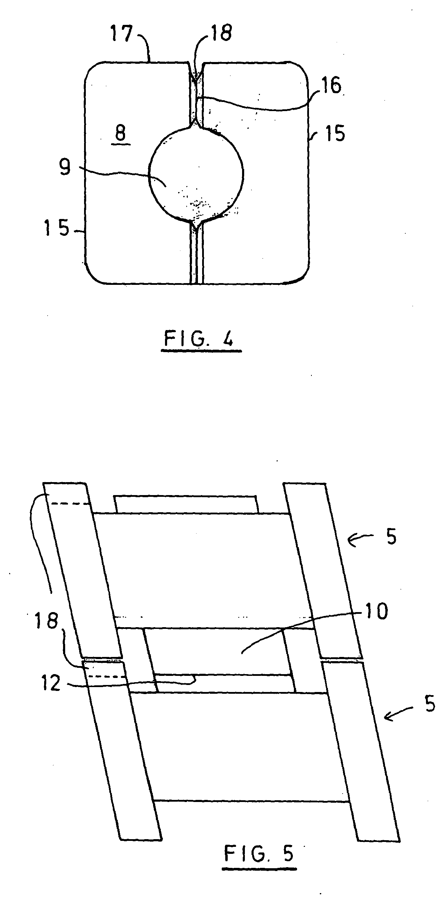

Nun zu Figur 4, die eine Stirnansicht eines Aufnahmekörpers 5 von der Seite der Spitze 4 der Befestigungselemente 1 her zeigt. Die Querschnittsform und damit die Flächenform der Stirnfläche ist ein Quadrat mit abgerundeten Ecken. In der Mitte ist die Innenöffnung 9 für den Schaft 3 der Befestigungselemente angeordnet. Mittig zwischen den beiden Seitenkanten 15 verläuft die Kerbe 16, die damit die Innenöffnung 9 durch ihren Mittelpunkt schneidet. An der in Figur 4 oberen Seite 17 des Aufnahmekörpers ist eine Kerbe 18 ausgebildet, die sich senkrecht zur Papierebene, das heißt in Längsrichtung der Befestigungselemente, durch die Seitenkante des verbreiterten Endbereichs 6 hindurch erstreckt. Durch diese Kerbe 18 kann der am benachbarten Aufnahmekörper verbleibende Teil des Verbindungselements 10 hindurch treten, wenn der Schuss gesetzt wird.

Figur 5 zeigt in vergrößertem Maßstab die Verbindung zweier Aufnahmekörper. Dies entspricht etwa der Ansicht der Figur 2, auf die auch verwiesen wird. Das Verbindungsmittel 10 weist eine bereits erwähnte Abreißstelle 12 auf, die aus der Mitte zwischen zwei Aufnahmekörpern 5 heraus seitlich versetzt ist. Dies soll in Figur 5 dargestellt sein. Der größere Teil des Verbindungsmittels 10 kann dann durch die angedeutete Kerbe 18 hindurch treten.

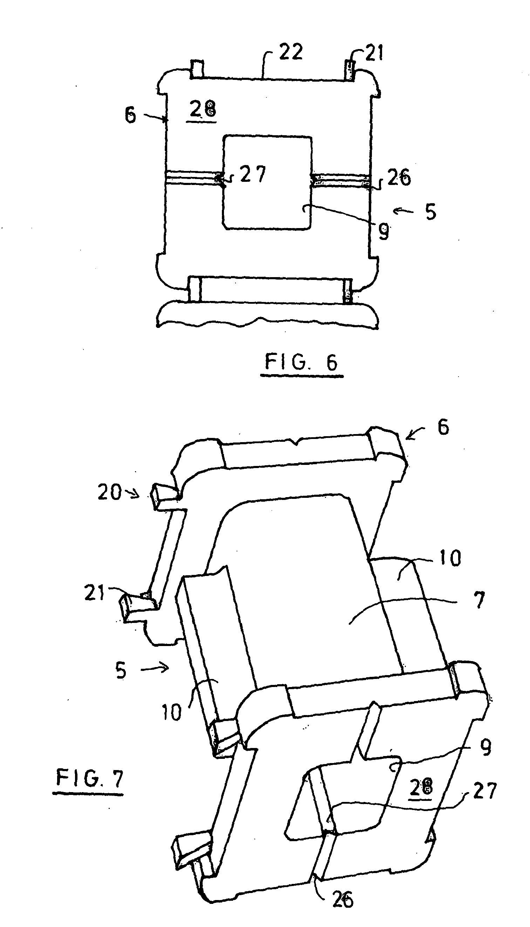

Figur 6 zeigt eine der Figur 4 ähnliche Darstellung der Stirnansicht eines Aufnahmekörpers 5 bei einer geänderten Ausführungsform. Die Grundform der Endbereiche 6, die als Flansch ausgebildet sind, ist wieder, wie bei Figur 4, ein Quadrat mit abgerundeten Ecken. Alle Seitenlinien sind jedoch zur Bildung von größeren Kerben 22 nach innen versetzt.

Die Innenöffnung 9 ist in diesem Ausführungsbeispiel quadratisch ausgebildet, was ebenfalls möglich ist, da die Bolzen dennoch festgehalten werden. Die in der Stirnfläche 28 angeordnete Kerbe 26 verläuft nicht in Längsrichtung des Magazinbandes, sondern quer zu dieser. In der Wand der Innenöffnung 9 setzt sich die Kerbe 26 als Schwächungskerbe durch die gesamte Innenöffnung 9 in deren Längsrichtung hindurch fort. Dies ist auch in Figur 4 zu sehen, wobei dann diese Schwächungskerbe ebenfalls in die Kerbe 16 in der Stirnfläche 8 übergeht.

Zur Verbindung zweier Aufnahmekörper 5 bei der Ausführungsform nach Figur 6 ist in den zurück gesetzten Bereichen 22 in deren jeweiligem Endbereich je ein Steg 21 vorhanden, die, siehe unten in Figur 6, mit beiden Endflanschen 6 verbunden sind. Wiederum weisen diese als Verbindungsmittel 20 dienenden Stege 21 eine Schwächungsstelle auf, die so orientiert ist, wie dies bei den vorhergehenden Ausführungsformen beschrieben wurde, siehe Figur 5.

Die Figur 7 zeigt eine perspektivische Darstellung eines Aufnahmekörpers der Ausführungsform nach Figur 6. Es ist hier zu sehen, dass sowohl zwischen den Endflanschen 6 jedes Aufnahmekörpers 5 ein Verbindungsmittel 10 in Form eines massiven Stegs vorhanden ist, als auch an den Endbereichen 6 selbst die Verbindungsmittel 20 in Form von Stegen 21. Aus dem unteren Teil der Figur 7 kann man auch die Schwächungskerbe 27 ersehen, die an der gleichen Stelle ausgebildet ist wie die Kerbe 26 in der Stirnfläche 28.

Man kann der Figur 7 entnehmen, dass die Stege 21 eine Art Keilform aufweisen, so dass dafür gesorgt wird, dass an der Stelle, wo sie ihre kleinste Abmessung haben, die Abreißstelle gebildet ist. Da die Stege 21 innerhalb der verbreiterten Kerben 22 angeordnet sind, können sie auch beim Abreißen des einen Aufnahmekörpers ungehindert zusammen mit dem abgerissenen Aufnahmekörper nach unten weg bewegt werden.

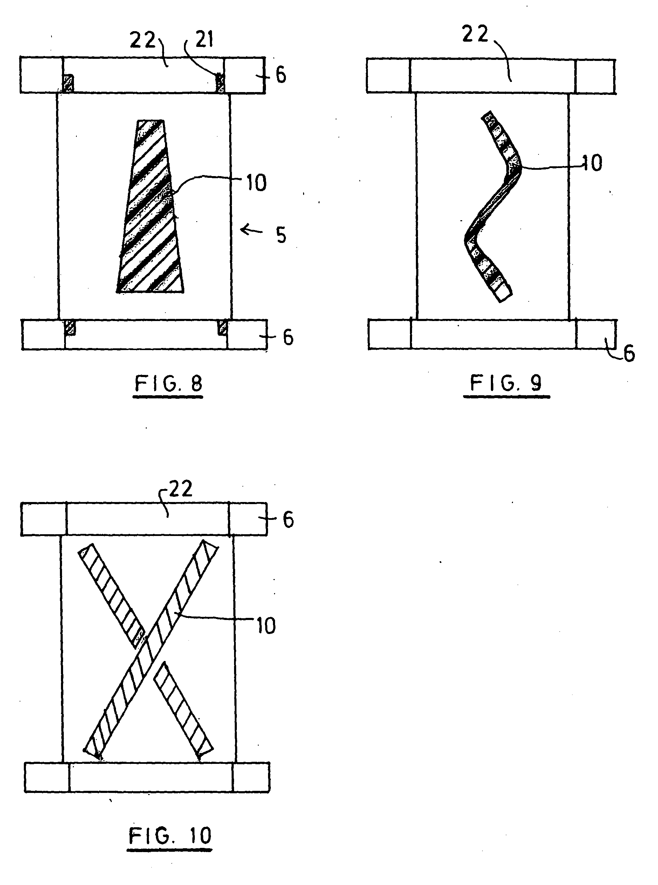

Figur 8 zeigt einen Schnitt quer zur Längsrichtung eines Magazinbands, wobei die Schnittebene genau zwischen zwei Aufnahmekörper gelegt ist. Der Schnitt führt also durch das Verbindungsmittel 10 und die beiden Stege 21 bei der Ausführungsform der Figur 8. Der zwischen den Endflanschen 6 vorhandene als Verbindungsmittel 10 dienende Steg weist eine Keilform in Längsrichtung auf, wobei die Spitze des Nagels, der in dem Aufnahmekörper 5 sitzt, nach oben gerichtet ist.

Bei der Ausführungsform nach Figur 9 weist das Verbindungsmittel 10 ebenfalls die Form eines Stegs auf, der sehr schmal ist, sich aber über einen breiteren Bereich der Querabmessung des Aufnahmekörpers erstreckt als es seiner Dicke entspricht.

Bei der Ausführungsform nach Figur 10 sind zwei gekreuzte Stege als Verbindungsmittel vorgesehen, wobei die Stege selbst wiederum eine kleine Querschnittsfläche aufweisen.

Allen diesen Ausbildungsformen ist gemeinsam, dass auf Grund der geometrischen Anordnung über einen größeren Teil der Längsabmessung und/oder Querabmessung des Aufnahmekörpers 5 die Verbindungsmittel ein Ausbiegen der Aufnahmekörper aus der Längsachse des Magazinbands verhindern. Gleichzeitig sorgt aber eine relativ kleine Querschnittsfläche dafür, dass die mechanische Festigkeit bei der Beanspruchung auf Scherung, wie sie beim Abreißen auftritt, nur gering ist. Damit lassen sich die Aufnahmekörper in Längsrichtung der Bolzen relativ leicht voneinander trennen.

Bei der Ausführungsform nach Figur 8 sind sowohl Verbindungsmittel 20 an den Endflanschen 6 als auch Verbindungsmittel 10 im Bereich zwischen den Endflanschen 6 vorhanden. Es sind alle Kombinationen möglich, dass heißt auch die Möglichkeit, dass nur Verbindungsmittel 20 an den Endflanschen 6 vorhanden sind, aber keine Verbindungsmittel 10 an dem Korpus des Aufnahmekörpers zwischen den Endflanschen 6. Die Ausführungsformen, bei denen die Verbindungsmittel 20 nicht vorhanden sind, sind in Figur 5 beispielsweise dargestellt.

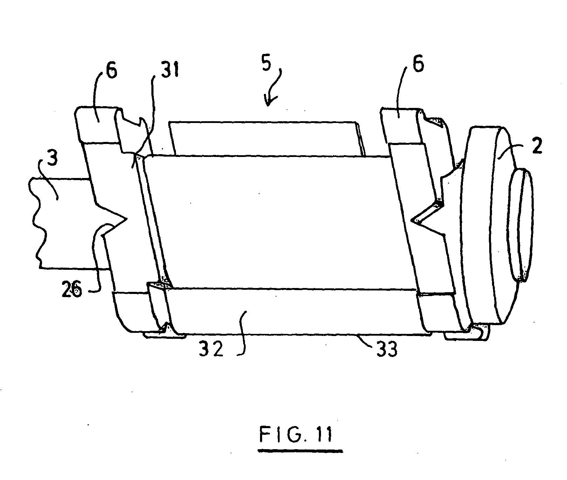

Figur 11 zeigt eine perspektivische Ansicht des letzten Aufnahmekörpers 5 eines Magazinbands. Bei der in Figur 11 dargestellten Ausführungsform haben die der Spitze des Nagels zugewandten Flansche 6 aller Aufnahmekörper eine Verdickung 31, die auf der dem jeweils anderen Flansch 6 zugewandten Innenfläche des Flanschs 6 ausgebildet ist. In der Richtung senkrecht zur Längsachse des Befestigungselements ist keine Verdickung ausgebildet. Beim Einschieben des Magazinbands, das in Figur 11 von rechts unten nach links oben erfolgt, wird für den Flansch 6 auf der in Figur 11 linken Seite eine Kerbe in dem Gehäuse des Bolzenschubgeräts benötigt, die etwas dicker ist als für den Flansch 6 auf der rechten Seite. Wenn auf der rechten Seite die Kerbe so ausgebildet ist, dass sie nur für den schmaleren Flansch 6 ausreicht, wird auf diese Weise eine zusätzliche Einlegesicherung verwirklicht. Dies erhöht die Sicherheit des Geräts weiter.

Wie bereits erwähnt wurde, zeigt Figur 11 den letzten Aufnahmekörper eines Magazinbands nach dieser Ausführungsform. Nach oben hin ist das Magazinband also durch ähnliche Aufnahmekörper 5 fortgesetzt zu denken. An der Rückseite des letzten Aufnahmekörpers 5, siehe Figur 11, ist ein Steg 32 angeformt, der jetzt nicht mehr Teil eines Verbindungselements mit einem folgenden Aufnahmekörper ist. Dieser Steg 32 reicht von der Innenseite des einen Flanschs 6 bis zu der Innenseite des anderen Flanschs 6 ohne einen Zwischenraum. In Längsrichtung des Magazinbands reicht die Außenkante 33 des Stegs 32 bis in die Kontur der Ecken der Flansche 6. Dieser Steg hat die Aufgabe, dem letzten Aufnahmekörper des Magazinbands eine verbesserte Auflage auf dem Transportschieber zu ermöglichen, insbesondere dann, wenn das letzte Befestigungselement mit dem Aufnahmekörper in die Kolbenführung transportiert wird und dort keine Führung durch den Magazinschacht mehr vorhanden ist, da ja jetzt kein weiterer Aufnahmekörper mehr folgt.

Außerdem sind bei dieser Ausführungsform die in den voneinander abgewandten Stirnflächen der Flansche 6 angeordneten quer verlaufenden Kerben 26 etwas tiefer ausgebildet, um das Abreißen des Aufnahmekörpers zu erleichtern. Diese Vergrößerung der Kerben 26 gilt nicht nur für den letzten Aufnahmekörper, sondern für alle Aufnahmekörper dieses Magazinbands.

Merkmale einer Ausführungsform sollen auch als Merkmale bei den anderen Ausführungsformen als offenbart gelten, falls sich nicht aus den Umständen des Einzelfalls etwas anders ergibt.

## Patentansprüche

1. Magazinband für Befestigungselemente (1), insbesondere Nägel, für ein Bolzensetzgerät, mit
1.1 einer Vielzahl von nebeneinander angeordneten Aufnahmekörpern (5), die
1.2 zur Aufnahme je eines Befestigungselements (1) eine Innenöffnung (9) für den Schaft (3) des Befestigungselements (1) aufweisen und
1.3 durch ein Verbindungsmittel (10) miteinander verbunden sind, das
1.4 zwischen benachbarten Aufnahmekörpern (5) eine Abreißstelle aufweist, die
1.5 aus der Mitte zwischen zwei Aufnahmekörpern (5) heraus nach hinten, d. h. in Richtung auf das später zu setzende Befestigungselement versetzt ist,
**dadurch gekennzeichnet, dass**
1.6 die der Abreißstelle (12) zugewandte Seite des näher benachbarten Aufnahmekörpers (5) eine mindestens bis zu der der Spitze (4) des Befestigungselements (1) zuzuordnende Stirnfläche (8) des Aufnahmekörpers (5) reichende Durchtrittskerbe (18) aufweist, deren Breite mindestens der Breite des Verbindungsmittels entspricht, sodaß der an dem der Abreißstelle benachbarten anderen Aufnahmekörper verbleibende Teil des Verbindungsmittels in axialer Richtung durch die Durchtrittskerbe (18) hindurch tritt, wenn ein Schuss eines Bolzensetzgerät gesetzt wird.

2. Magazinband nach Anspruch 1, bei dem mindestens die der Spitze des Befestigungselements (1) zugewandte Stirnfläche (8) der Aufnahmekörper (5) eine sich vorzugsweise über die gesamte Stirnfläche (8) erstreckende Kerbe (16) aufweist.

3. Magazinband nach Anspruch 2, bei dem die Kerben (16) aller Aufnahmekörper (5) parallel zueinander und vorzugsweise quer zur Längsachse des Magazinbands verlaufen.

4. Magazinband nach Anspruch 2 oder 3, bei dem die Innenöffnung (9) des Aufnahmekörpers (5) eine in axialer Richtung dieser Innenöffnung (9) verlaufende Schwächungskerbe aufweist, die gegebenenfalls die Kerbe (16) in der Stirnfläche (8) trifft.

5. Magazinband nach einem der vorhergehenden Ansprüche, bei dem mindestens die gleich gerichteten Stirnflächen (8) der Aufnahmekörper (5) in jeweils parallelen Ebenen liegen.

6. Magazinband nach einem der vorhergehenden Ansprüche, bei dem die Aufnahmekörper (5) mindestens im Bereich ihrer Stirnflächen (8) einen rechteckigen, insbesondere quadratischen Querschnitt aufweisen.

7. Magazinband nach Anspruch 6, bei dem die Seitenkanten (15) der rechteckigen Endbereiche (6) der Aufnahmekörper (5) parallel zu der Längsrichtung des Magazinbands verlaufen.

8. Magazinband nach einem der Ansprüche 1 bis 5, bei dem die Aufnahmekörper mindestens im Bereich ihrer Stirnflächen einen runden, insbesondere kreisrunden Querschnitt aufweisen.

9. Magazinband nach einem der vorhergehenden Ansprüche, bei dem die Achsen der Innenöffnungen (9) der Aufnahmekörper (5) senkrecht zur Längsachse des Magazinbands verlaufen.

10. Magazinband nach einem der Ansprüche 1 bis 8, bei dem die Achsen der Innenöffnungen (9) der Aufnahmekörper (5) schräg zur Längsachse des Magazinbands verlaufen.

11. Magazinband nach einem der vorhergehenden Ansprüche, bei dem die Aufnahmekörper (5) im Bereich zwischen ihren Stirnflächen (8) einen kleineren Querschnitt aufweisen.

12. Magazinband nach Anspruch 11, bei dem die in axialer Richtung der Innenöffnungen (9) gemessene Erstreckung des Verbindungsmittels (10) zwischen zwei Aufnahmekörpern (5) kleiner ist als die Erstreckung der Aufnahmekörper (5) selbst, höchstens so groß wie die Länge des Bereichs mit verringertem Querschnitt.

13. Magazinband nach Anspruch 11 oder 12, bei dem der Bereich verringerten Querschnitts eine mindestens einseitige Abflachung auf der Breitseite des Magazinbands bildet.

14. Magazinband nach einem der vorhergehenden Ansprüche, bei dem die axialen Endbereiche der Aufnahmekörper (5) Flansche (6) bilden.

15. Magazinband nach Anspruch 14, bei dem ein Verbindungsmittel (10) im Bereich zwischen den Flanschen (6) ausgebildet ist.

16. Magazinband nach einem der vorhergehenden Ansprüche, bei dem ein Verbindungsmittel (20) im Bereich der axialen Endbereiche der Aufnahmekörper (5) vorgesehen ist, insbesondere im Bereich der Flansche (6).

17. Magazinband nach Anspruch 16, bei dem das Verbindungsmittel (20) von einem Paar von Stegen (21) gebildet ist, die einen gegenseitigen Abstand von einander aufweisen.

18. Magazinband nach einem der vorhergehenden Ansprüche, bei dem das Verbindungsmittel (10, 20) derart ausgebildet ist, dass es ein Ausknicken des Magazinbands hindert, das Abreißen in axialer Richtung der Aufnahmekörper aber erleichtert.

19. Magazinband nach einem der vorhergehenden Ansprüche, bei dem das Verbindungsmittel (10, 20) derart ausgebildet ist, dass es sich bei kleiner Querschnittsfläche über eine große Querabmessung und/oder Längsabmessung der Aufnahmekörper (5) erstreckt.

20. Magazinband nach einem der Ansprüche 16, 17, oder 18, 19, wenn diese vom Anspruch 16 oder 17 abhängen, bei dem das zwischen den Endflanschen (6) angeordnete Verbindungsmittel (10) als nicht unterbrochener Steg ausgebildet ist.

21. Magazinband nach einem der Ansprüche 17 oder 18 bis 20, wenn diese vom Anspruch 17 abhängen, bei dem die an den Endflanschen (6) angeordneten Stege (21) zur Bildung einer Abreißstelle an dem Endflansch (6) des einen Aufnahmekörpers (5) eine abnehmende Höhe und/oder Breite und/oder Dicke aufweisen.

22. Magazinband nach einem der vorhergehenden Ansprüche, bei dem das Magazinband einstückig aus Kunststoff gespritzt ist.

23. Magazinband nach einem der Ansprüche 14, 15, oder 16 bis 22, wenn diese vom Anspruch 14 oder 15 abhängen, bei dem einer der Flansche (6), vorzugsweise der der Spitze des Nagels zugewandte Flansch (6), in Längsrichtung des Nagels dicker ausgebildet ist als der andere Flansch (6).

24. Magazinband nach einem der Ansprüche 14 bis 23, bei dem an der Rückseite des letzten Aufnahmekörpers (5) des Magazinbands ein Steg (32) ausgebildet ist, der von Innenseite des einen Flanschs (6) bis zu der Innenseite des anderen Flanschs (6) durchgeht.

25. Magazinband nach Anspruch 24, bei dem die Außenkante (33) des Stegs (32) in der Außenkontur der Ecken beider Flansche (6) liegt.

## Claims

1. A magazine belt for fasteners (1), in particular, nails, for a bolt setter having
1.1 numerous receptacles (5) arranged next to one another, each of which has
1.2 an internal port (9) for accommodating the shaft (3) of a single fastener (1) and
1.3 are joined to one another by an interconnection means (10) that has
1.4 breakage lines between neighbouring receptacles (5) that
1.5 are offset rearward from the centrelines running between pairs of adjacent receptacles (5), i.e., offset in the direction of those fasteners to be subsequently set,
**characterized in that**
1.6 the sides of the closer, neighbouring receptacles (5) facing the breakage lines (12) have through notches (18) extending at least to that end (8) of the receptacles (5) that is to be associated with the tips (4) of the fasteners (1), whose width at least equals the width of the interconnection means (10) in order that that portion of the interconnection means remaining on other receptacle neighbouring on the breakage line will transit the through notch (18) along the axial direction when a fastener is set by a shot from a bolt setter.

2. A magazine belt according to claim 1, wherein at least the ends (8) of the receptacles (5) facing the tips of the fasteners (1) have a notch (16), preferably one extending over the full width of that end (8).

3. A magazine belt according to claim 2, wherein the notches (16) on all receptacles (5) are parallel to one another, and preferably orthogonal to the longitudinal axis of the magazine belt.

4. A magazine belt according to claim 2 or claim 3, wherein the internal ports (9) on the receptacles (5) have a weakening notch running along the axial direction of their internal port (9) that may be joined to the notch (16) on their end (8), if deemed necessary.

5. A magazine belt according to any of the foregoing claims, wherein at least the ends (8) of the receptacles (5) facing in the same direction lie in mutually parallel planes.

6. A magazine belt according to any of the foregoing claims, wherein the receptacles (5) have a rectangular, in particular, square, cross-section in the vicinity of their ends (8).

7. A magazine belt according to claim 6, wherein the lateral edges (15) of the rectangular ends (6) of the receptacles (5) are parallel to the magazine belt's longitudinal axis.

8. A magazine belt according to any of claims 1 - 5, wherein the receptacles have a round, in particular, circular, cross-section, at least in the vicinity of their ends.

9. A magazine belt according to any of the foregoing claims, wherein the axes of the internal ports (9) of the receptacles (5) are orthogonal to the magazine belt's longitudinal axis.

10. A magazine belt according to any of the claims 1 - 8, wherein the axes of the internal ports (9) of the receptacles (5) are inclined with respect to the magazine belt's longitudinal axis.

11. A magazine belt according to any of the foregoing claims, wherein the section between the ends (8) of the receptacles (5) has a smaller cross-section.

12. A magazine belt according to claim 11, wherein the extension of that section of the interconnection means (10) running between two, adjacent receptacles (5), measured along the axis of their internal ports (9), is less than that the receptacles (5), and does not exceed the length of that section thereof having the smaller cross-section.

13. A magazine belt according to claim 11 or claim 12, wherein the section having a small cross-section forms a flat on at least one of the broad sides of the magazine belt.

14. A magazine belt according to any of the foregoing claims, wherein the axial ends of the receptacles (5) form flanges (6).

15. A magazine belt according to claim 14, wherein an interconnection means (10) is formed in the zone between the flanges (6).

16. A magazine belt according to any of the foregoing claims, wherein an interconnection means (20) is provided in the zones between the axial ends of the receptacles (5), in particular, in the vicinities of their flanges (6).

17. A magazine belt according to claim 16, wherein the interconnection means (20) is formed by pairs of spatially separated lands (21).

18. A magazine belt according to any of the foregoing claims, wherein the interconnection means (10, 20) is configured such that it prevents the magazine belt from buckling, but eases breaking it along the receptacles' axis.

19. A magazine belt according to any of the foregoing claims, wherein the interconnection means (10, 20) is configured such that it extends over a large fraction of the lateral extent and/or longitudinal extent of the receptacles (5), while having a small cross-sectional area.

20. A magazine belt according to any of claim 16, 17, or claim 18, 19, if the latter are dependent upon claim 16, wherein the interconnection means (10) arranged between the end flanges (6) is configured in the form of an uninterrupted land.

21. A magazine belt according to any of claim 17 or claims 18 - 20, if the latter are dependent upon claim 17, wherein the lands (21) arranged on the end flanges (6) have a decreasing height, and/or width, and/or thickness in order to form a breakage line at an end flange (6) of a receptacle (5).

22. A magazine belt according to any of the foregoing claims, wherein the magazine belt is injection moulded in one piece from plastic.

23. A magazine belt according to any of claim 14, 15 or claims 16 - 22, if the latter are dependent upon claim 14 or claim 15, wherein one of the flanges (6), preferably that flange (6) facing the tip of the nail, is thicker along the direction of the nail's longitudinal axis than the other flange (6).

24. A magazine belt according to any of claims 14 - 23, wherein a land (32) extending from the inner surface of one flange (6) to the inner surface of the other flange (6) is formed on the backside of the magazine belt's last receptacle (5).

25. A magazine belt according to claim 24, wherein the outer edge (33) of the land (32) is coincident with the outer contours of the corners of both flanges (6).

## Revendications

1. Bande de magasin pour éléments de fixation (1), notamment des clous, pour un pistolet de scellement, comprenant
1.1 une pluralité de corps de logement (5) disposés les uns à côté des autres, qui,
1.2 pour le logement de respectivement un élément de fixation (1), présentent un orifice intérieur (9) pour la queue (3) de l'élément de fixation (1) et qui
1.3 sont raccordés entre eux par un moyen de raccordement (10) qui
1.4 présente un point de rupture entre des corps de logement voisins (5), qui,
1.5 à partir du milieu entre deux corps de logement (5), est décalé vers l'arrière, c'est-à-dire en direction allant vers l'élément de fixation à sceller ultérieurement,
**caractérisé en ce que**
1.6 le côté, tourné vers le point de rupture (12), du corps de logement (5) voisin plus proche présente une encoche de passage (18) allant au moins jusqu'à la face frontale (8) du corps de logement (5) à faire correspondre à la pointe (4) de l'élément de fixation (1), dont la largeur correspond au moins à la largeur du moyen de raccordement, de sorte que la partie, restant sur l'autre corps de logement voisin du point de rupture, du moyen de raccordement traverse l'encoche de passage (18) en direction axiale lorsqu'un tir d'un pistolet de scellement est donné.

2. Bande de magasin selon la revendication 1, dans laquelle au moins la face frontale (8), tournée vers la pointe de l'élément de fixation (1), des corps de logement (5) présente une encoche (16) s'étendant de préférence sur toute la face frontale (8).

3. Bande de magasin selon la revendication 2, dans laquelle les encoches (16) de tous les corps de logement (5) s'étendent parallèlement les unes aux autres et de préférence transversalement par rapport à l'axe longitudinal de la bande de magasin.

4. Bande de magasin selon la revendication 2 ou 3, dans laquelle l'orifice intérieur (9) du corps de logement (5) présente une encoche de diminution s'étendant en direction axiale de cet orifice intérieur (9), qui touche éventuellement l'encoche (16) dans la face frontale (8).

5. Bande de magasin selon l'une quelconque des revendications précédentes, dans laquelle au moins les faces frontales (8), orientées de la même manière, des corps de logement (5) sont situées dans des plans respectivement parallèles.

6. Bande de magasin selon l'une quelconque des revendications précédentes, dans laquelle les corps de logement (5) présentent une section rectangulaire, notamment carrée, au moins dans la partie de leurs faces frontales (8).

7. Bande de magasin selon la revendication 6, dans laquelle les bords latéraux (15) des parties terminales rectangulaires (6) des corps de logement (5) s'étendent parallèlement à la direction longitudinale de la bande de magasin.

8. Bande de magasin selon l'une quelconque des revendications 1 à 5, dans laquelle les corps de logement présentent une section ronde, notamment circulaire, au moins dans la partie de leurs faces frontales.

9. Bande de magasin selon l'une quelconque des revendications précédentes, dans laquelle les axes des orifices intérieurs (9) des corps de logement (5) s'étendent verticalement par rapport à l'axe longitudinal de la bande de magasin.

10. Bande de magasin selon l'une quelconque des revendications 1 à 8, dans laquelle les axes des orifices intérieurs (9) des corps de logement (5) s'étendent de manière inclinée par rapport à l'axe longitudinal de la bande de magasin.

11. Bande de magasin selon l'une quelconque des revendications précédentes, dans laquelle les corps de logement (5) présentent une section plus petite dans la partie située entre leurs faces frontales (8).

12. Bande de magasin selon la revendication 11, dans laquelle l'étendue, mesurée en direction axiale des orifices intérieurs (9), du moyen de raccordement (10) entre deux corps de logement (5) est plus petite que l'étendue des corps de logement (5) eux-mêmes, tout au plus aussi grande que la longueur de la partie ayant une section diminuée.

13. Bande de magasin selon la revendication 11 ou 12, dans laquelle la partie de section diminuée forme un aplatissement au moins sur un côté, sur le côté large de la bande de magasin.

14. Bande de magasin selon l'une quelconque des revendications précédentes, dans laquelle les parties terminales axiales des corps de logement (5) forment des brides (6).

15. Bande de magasin selon la revendication 14, dans laquelle un moyen de raccordement (10) est réalisé dans la partie située entre les brides (6).

16. Bande de magasin selon l'une quelconque des revendications précédentes, dans laquelle un moyen de raccordement (20) est ménagé dans la zone des parties terminales axiales des corps de logement (5), notamment dans la partie des brides (6).

17. Bande de magasin selon la revendication 16, dans laquelle le moyen de raccordement (20) est réalisé par une paire de nervures (21) qui présentent un écart mutuel les unes par rapport aux autres.

18. Bande de magasin selon l'une quelconque des revendications précédentes, dans laquelle le moyen de raccordement (10, 20) est réalisé de manière à ce qu'il empêche une flexion de la bande de magasin mais facilite la rupture en direction axiale des corps de logement.

19. Bande de magasin selon l'une quelconque des revendications précédentes, dans laquelle le moyen de raccordement (10, 20) est réalisé de manière à ce qu'en cas de petite surface de section, il s'étende sur une grande dimension transversale et/ou dimension longitudinale des corps de logement (5).

20. Bande de magasin selon l'une quelconque des revendications 16, 17 ou 18, 19, lorsque celles-ci dépendent de la revendication 16 ou 17, dans laquelle le moyen de raccordement (10) disposé entre les brides terminales (6) est réalisé en tant que nervure non interrompue.

21. Bande de magasin selon l'une quelconque des revendications 17, ou 18 à 20, lorsque celles-ci dépendent de la revendication 17, dans laquelle les nervures (21) disposées sur les brides terminales (6) présentent une hauteur décroissante et/ou une largeur décroissante et/ou une épaisseur décroissante pour former un point de rupture sur la bride terminale (6) de l'un des corps de logement (5).

22. Bande de magasin selon l'une quelconque des revendications précédentes, dans laquelle la bande de magasin est injectée en matière plastique en une seule pièce.

23. Bande de magasin selon l'une quelconque des revendications 14, 15, ou 16 à 22, lorsque celles-ci dépendent de la revendication 14 ou 15, dans laquelle une des brides (6), de préférence la bride (6) tournée vers la pointe du clou, est réalisée, en direction longitudinale du clou, de manière plus épaisse que l'autre bride (6).

24. Bande de magasin selon l'une quelconque des revendications 14 à 23, dans laquelle, au dos du dernier corps de logement (5) de la bande de magasin, est réalisée une nervure qui va du côté intérieur de l'une des brides (6) jusqu'au côté intérieur de l'autre bride (6).

25. Bande de magasin selon la revendication 24, dans laquelle le bord extérieur (33) de la nervure (32) se situe dans le contour extérieur des coins des deux brides (6).
